# EUROPÄISCHE PATENTANMELDUNG

(11) **EP 3 061 741 A1**
(43) Veröffentlichungstag der Anmeldung: **31.08.2016**
(21) Anmeldenummer: 15182127.9
(22) Anmeldetag: 24.08.2015
(51) Int. Cl.: C05B 11/10, C05D 9/00, C03C 8/00

(54) **VORRICHTUNG UND VERFAHREN ZUR INDUSTRIELLEN VEREDELUNG VON RECYCLINGPHOSHORQUELLEN**

(30) Priorität: 27.02.2015 DE 102015002815
(71) Anmelder: Bohndick, Carmen, 39638 Gardelegen OT Jävenitz (DE)
(72) Erfinder: Bohndick, Carmen, 39638 Gardelegen OT Jävenitz (DE)
(74) Vertreter: Hertin und Partner Rechts- und Patentanwälte PartG mbB

(57) **Zusammenfassung**

Die Erfindung betrifft eine Vorrichtung zur Herstellung von Phosphat- und Mehrnährstoffdüngemitteln aus phosphorhaltigen Ausgangsstoffen umfassend Vorlagebehälter für mindestens einen phosphorhaltigen Ausgangsstoff, eine Mischvorrichtung umfassend Mischwerkzeuge und eine Granuliervorrichtung mit einer Granulierfläche wobei die Mischwerkzeuge der Mischvorrichtung und/oder die Granulierfläche der Granuliervorrichtung mindestens teilweise emailliert sind.
Weiterhin betrifft die Erfindung ein Verfahren zur Herstellung von Phosphat- und Mehrnährstoffdüngemitteln aus phosphorhaltigen Ausgangsstoffen umfassend
- Beförderung eines ersten Ausgangsstoffes, umfassend eine Orthophosphorsäure, zu einem ersten Vorlagebehälter;
- Beförderung eines zweiten Ausgangsstoffes, umfassend eine phosphorhaltigen Asche zu einem zweiten Vorlagebehälter;
- Entnahme von Proben von mindestens einem Ausgangsstoff zur Vorlage für die Vorrichtung zur Röntgenfluoreszenzanalyse, wobei die Entnahme der Proben bevorzugt auf dem Beförderungsweg zu den Vorlagebehältern erfolgt; und
- Durchführung einer Röntgenfluoreszenzanalyse der Proben und Bestimmung von Parametern umfassend den Phosphatgehalt und/oder den Schadstoffgehalt für mindestens einen Ausgangsstoff.

## Beschreibung

Die Erfindung betrifft eine Vorrichtung zur Herstellung von Phosphat- und Mehrnährstoffdüngemitteln aus phosphorhaltigen Ausgangsstoffen. Weiterhin betrifft die Erfindung ein Verfahren zur Herstellung von Phosphat- und Mehrnährstoffdüngemitteln aus phosphorhaltigen Ausgangsstoffen.

Phosphor ist ein für alle Lebewesen essenzielles Element. Insbesondere für das Pflanzenwachstum hat Phosphor eine hohe Bedeutung und wird somit in der Pflanzenproduktion als Phosphatdüngemittel im industriellen Maßstab eingesetzt. Die konventionelle Herstellung von Phosphatdüngemitteln basiert auf dem Einsatz von Rohphosphaten. Die weltweiten Rohphosphatquellen sind jedoch begrenzt und bereits zu einem beträchtlichen Teil erschöpft. Nach Angaben des U.S. Geological Survey reichen die Vorkommen noch für etwa 100 Jahre. Berücksichtigt man den wachsenden Rohstoffbedarf aufstrebender Länder wie China und Indien könnten diese Ressourcen schon nach 50 Jahren aufgebraucht werden. Zudem ist bereits jetzt sichtbar, dass die Qualität der geförderten Rohphosphate durch Schwermetallbelastung nachlässt. Dies hat zur Folge, dass sich die Kosten der Produktion von Phosphatdüngemitteln aus Rohphosphaten durch Abtrennung dieser Schadstoffe erhöhen. Weiterhin gibt es in Europa keine signifikanten Rohphosphatvorkommen, so dass sich für europäische Länder eine starke Importabhängigkeit ergibt.
Die Entwicklung alternativer Verfahren zur Herstellung von Phosphatdüngemitteln ist somit von großer ökologischer und ökonomischer Bedeutung. Eine Alternative zur konventionellen Herstellung von Phosphatdüngemitteln aus Rohphosphaten ist die Rückgewinnung von Phosphor aus phosphorhaltigen Sekundärquellen, wie beispielsweise aus biologischen Abfällen. Zur Rückgewinnung sind derzeit zwei prinzipielle Wege bekannt. Ein Verfahrensweg ist auf den Labor- und Technikumsmaßstab begrenzt und gewinnt Phosphor direkt aus dem biologischen Produkt, zum Beispiel kommunalen Klärschlamm, zurück. Mittelfristig lässt sich dieser Weg jedoch nicht auf industrielle Maßstäbe zur Herstellung von Phosphatdüngemitteln ausweiten. Die direkte Umsetzung von biologischem Abfall, wie zum Beispiel kommunalem Klärschlamm, in Phosphatdüngemitteln ist somit unter wirtschaftlichen Gesichtspunkten mittelfristig konventionellen Methoden der Phosphatdüngemittelherstellung unterlegen. Für die industrielle Herstellung von Phosphatdüngemitteln aus sekundären Phosphorquellen hat sich ein zweiter Weg bewährt. Hierbei erfolgt zunächst die thermische Umsetzung der sekundären Phosphorquellen durch eine Wirbelschichtverbrennung. In diesem Verfahren wird durch die Verbrennung des organischen Anteils eine feine stilisierte phosphorhaltige Asche hergestellt, welche eine hohe spezifische Oberfläche und einen konzentrierten Mineralteil aufweist. Diese Eigenschaften ermöglichen eine Verarbeitung der Asche zu Phosphatdüngemitteln mit kurze Reaktionszeiten. Ein solches Verfahren zur Herstellung von Phosphat und Mehrnährstoffdüngemitteln aus regenerativen phosphorhaltigen Abfällen ist beispielsweise aus der DE 102010034042 B4 bekannt.

In der DE 102010034042 B4 ist ein Verfahren offenbart, welches eine thermische Asche, die aus der Monoverbrennung von kommunalem Klärschlamm gewonnen wurde, mit Orthophosphorsäure zu Calciumdihydrogenphosphat und zu einem Kali- oder Erdkalidihydrogenphosphat umsetzt:

Ca₄Mg₅(PO₄)₆ +12 H₃PO₄•2H₂O ====→ 4(Ca(H₂PO₄)₂ + 5Mg(H₂PO₄)₂+ 12H₂O

Weiterhin kann, wie in DE 102010034042 B4 beschrieben, durch die Zugabe von Erdalkalisalzen, z.B. Kaliumsulfat, und einem Stickstoffträger, z.B. Ammoniumsulfat, die Reaktion erweitert werden bis zur Bildung eines NP-, PK-, oder NPK-Düngers, wobei N für Stickstoff, P für Phosphor und K für Kalium steht. Der dadurch erhaltene NPK-Dünger enthält Monoammoniumsphosphat, Magnesiumhydrogenphosphat, Kaliumsulfat und Calciumsulfat. P-Dünger ist somit eine alternative Bezeichnung für Phosphatdüngemittel und NP-, PK-, oder NPK-Dünger werden auch als Mehrnährstoffdüngemittel bezeichnet.

Eine Vorrichtung zur Umsetzung eines solchen Verfahrens ist ebenfalls aus dem Stand der Technik bekannt und im Folgenden als Phosphorrecyclingvorrichtung bezeichnet. Im Stand der Technik ist insbesondere eine Phosphorrecyclingvorrichtung bekannt, die als industrielle Produktionsanlage Phosphat- und Mehrnährstoffdüngemittel aus mineralisierter Klärschlammasche herstellt. Dabei entspricht die mineralisierte Klärschlammasche in der chemischen Zusammensetzung einem Stanfieldit, welches eine Form des Apatits ist, in der noch weitere dünngewichtige Spurenelemente eingeschlossen sind.
Die aus dem Stand der Technik bekannte Phosphorrecyclingvorrichtung umfasst folgende Betriebseinheiten: eine Betriebseinheit zur Rohstoffannahme für die Feststoffe, ein Betriebseinheit zur Säureannahme, eine Betriebseinheit zur Konditionierung und Neutralisation, eine Betriebseinheit zur Trocknung und Konfektionierung und eine Betriebseinheit zur Energieversorgung. Die Betriebseinheit zur Rohstoffannahme für die Feststoffe, den Ausgangsfeststoffen, umfasst mehrere Lagersilos für die Aufnahme von Zuschlagstoffen und phosphorhaltiger Asche. Die Betriebseinheit zur Säureannahme umfasst mehrere säurefester Tankbehälter, welche mit Hilfe von Säurepumpen mit Orthophosphorsäure befüllt werden. In der Betriebseinheit zur Konditionierung und Neutralisation wird die Reaktion der phosphorhaltigen Asche mit der Orthophosphorsäure durchgeführt und gesteuert. Dabei werden die Ausgangsstoffe umfassend die Orthophosphorsäure und Ausgangsfeststoffe, wie phosphorhaltige Asche, in Vorlagebehälter gefördert. Von den Vorlagebehältern werden die Ausgangsfeststoffe mit Hilfe von Differentialdosierwaagen und Förderschneckenkombinationen in eine Mischvorrichtung befördert. Durch die Differentialdosierwaagen ist dabei der Mengenstrom der Ausgangsfeststoffe regulierbar. Weiterhin wird die Orthophosophorsäure von dem Vorlagebehälter über eine Dosierpumpe in die Mischvorrichtung gegeben. Dabei wird durch die Dosierpumpe die Zugabemenge der Orthophosphorsäure eingestellt. In der Mischvorrichtung wird die phosphorhaltige Asche somit unter Zugabe der Orthophosphorsäure neutralisiert und zusammen mit der Vermischung der Zuschlagstoffe ein phosphorhaltiges Grünkorngemisch erzeugt, welches ein Zwischenprodukt zum Phosphat- und Mehrnährstoffdüngemittel ist. Das Grünkorngemisch wird anschließend in einen Drehrohrtrockner befördert, in dem es zu einem inhomogenen Granulat weiterverarbeitet wird. In der Betriebseinheit zur Trocknung und Konfektionierung wird dieses Granulat in ein Klassifizierungssystem geleitet, welches das Granulat entsprechend der Größe der Granulatkörner in Oberkorn, Gutkorn und Unterkorn einteilt. Hierbei entspricht Oberkorn einer Granulatkorngröße von mehr als 5 mm, Gutkorn einer Granulatkorngröße von 2 mm bis 5 mm und Unterkorn einer Granulatkorngröße von weniger als 2 mm. Das als Oberkorn klassifizierte Granulat wird in die Mischvorrichtung und das als Unterkorn klassifizierte Granulat in die Granuliervorrichtung zurückgeleitet. Das Gutkorn wird in eine Trocknungsvorrichtung befördert und unter Messung des Feuchtegehaltes zu einem Phosphat- und Mehrnährstoffdüngemittel weiterverarbeitet. Die Betriebseinheit der Energieversorgung stellt die elektrische Energie zur Verfügung, welche für die verschiedenen Prozesse benötigt wird.

Durch die im Stand der Technik bekannte Vorrichtung ist es möglich, ein Phosphat- und Mehrnährstoffdüngemittel im industriellen Maßstab herzustellen. Dabei weisen Vorrichtungen aus dem Stand der Technik jedoch erhebliche Mängel auf, welche die Produktion des Phosphat- und Mehrnährstoffdüngemittels beeinträchtigen und dadurch nicht wirtschaftlich sind. Zum einen kommt es in der bekannten Mischvorrichtung zu starken Anbackungen des phosphathaltigen Grünkorngemisches an den Mischwerkzeugen, welches die Menge der zu vermischenden Ausgangsstoffe stark begrenzt. Weiterhin führen die Anbackungen zu einem erhöhten Reinigungsaufwand der Mischvorrichtung und einem damit verbundenen Produktionsausfall. In der Granuliervorrichtung kommt es ebenfalls zu verstärkter Anbackung des phosphathaltigen Granulates insbesondere an der Oberfläche des Granuliertellers. Daraus resultiert eine verminderte Granulatqualität. Der Anteil des Granulates, welcher als Gutkorn klassifiziert wird, beträgt mit bekannten Vorrichtungen weniger als 40 %. Weiterhin führt die Beförderung der Ausgangsfeststoffe, insbesondere der phosphorhaltigen Aschen zu einer erheblichen Staubentwicklung. Zudem ist der Verschleiß der Phosphorrecyclinganlage aufgrund der reaktiven Ausgangsstoffe hoch, so dass die Funktionstüchtigkeit der produktberührenden Geräte beeinträchtig wird und diese oftmals ausgetauscht werden müssen. Weiterhin kann mit Vorrichtungen aus dem bekannten Stand der Technik nur phosphorhaltige Aschen mit einem Phosphatgehalt in einem engen Parameterbereich von zum Beispiel 18-20 % weiterverarbeitet werden. Insbesondere führte die Zugabe von phosphorhaltigen Aschen mit unterschiedlichen Phosphatanteilen zu starken Qualitätsschwankungen des produzierten Phosphat- und Mehrnährstoffdüngemittels. Daher wird im bekannten Stand der Technik insbesondere phosphorhaltige Asche eingesetzt, welche aus kommunalem Klärschlamm durch Verbrennung gewonnen wurde und einen stabilen Phosphatanteil von 18-20 % aufweist. Weitere sekundäre Phosphorquellen welche durch die thermische Mineralisierung von Gärresten aus Biogasanlagen, Tiermehl und Güllefeststoffe gewonnen werden, werden daher im Stand der Technik weitestgehend nicht zur Herstellung von Phosphat- und Mehrnährstoffdüngemitteln genutzt.

Der Erfindung liegt die Aufgabe zugrunde, eine Phosphorrecyclingvorrichtung zur Herstellung von Phosphat- und Mehrnährstoffdüngemitteln aus regenerativen Phosphorquellen bereitzustellen und dazu die Nachteile des Standes der Technik zu beseitigen. Insbesondere liegt der Erfindung liegt die Aufgabe zugrunde eine Phosphorrecyclingvorrichtung bereitzustellen, welche eine höhere Produktivität aufweist und Phosphat- und Mehrnährstoffdüngemittel mit höherer Qualität herstellt, als dies mit Phosphorrecyclingvorrichtungen aus dem Stand der Technik möglich ist.

Diese Aufgabe wird durch eine Phosphorrecyclingvorrichtung gemäß Anspruch 1 gelöst. Die erfindungsgemäße Phosphorrecyclingvorrichtung zur Herstellung von Phosphat- und Mehrnährstoffdüngemittel umfasst dabei Vorlagebehälter für mindestens einen phosphorhaltigen Ausgangsstoff, eine Mischvorrichtung umfassend Mischwerkzeuge und eine Granuliervorrichtung mit einer Granulierfläche, wobei die Oberfläche der Mischwerkzeuge der Mischvorrichtung und/oder die Granulierfläche der Granuliervorrichtung mindestens teilweise emailliert sind. Ein Verfahren zur Herstellung von Phosphat- und Mehrnährstoffdüngemitteln wird in den unabhängigen Ansprüchen offenbart. Bevorzugte Ausführungsformen sind Gegenstände der abhängigen Ansprüche.

Unter der Phosphorrecyclingvorrichtung ist bevorzugt eine industrielle Produktionsanlage zur Herstellung von Phosphat- und Mehrnährstoffdüngemitteln aus sekundären Phosphorquellen gemeint. Phosphorrecyclingvorrichtungen sind wie oben ausgeführt im Stand der Technik bekannt. Die erfindungsgemäße Emaillierung der Mischwerkzeuge der Mischvorrichtung und/oder die Granulierfläche der Granuliervorrichtung erhöht die Produktivität der Phosphorrecyclingvorrichtung und die Qualität des Phosphat- und Mehrnährstoffdüngemittel überraschend stark.

Insbesondere führt die teilweise Emaillierung der Mischwerkzeuge überraschenderweise zu einem stark verminderten Anbacken des Gemisches umfassend, die phosphorhaltige Asche und die Phosphorsäure. Dieses Gemisch wird wie bei den Ausführungen zum Stand der Technik als phosphorhaltiges Grünkorngemisch bezeichnet. Unter einer teilweisen Emaillierung der Mischwerkzeuge ist eine Emaillierung der Mischwerkzeuge gemeint, welche die Oberfläche der Mischwerkzeuge zu bevorzugt mindestens 30 %, ganz bevorzugt mindestens 50 %, besonders bevorzugt mindestens 70 % und ganz besonders bevorzugt mindestens 90 % abdeckt. Unter Mischwerkzeuge der Mischvorrichtung sind insbesondere die Elemente der Mischvorrichtung gemeint, welche das Mischgut rühren, zerkleinern oder transportieren. Mischwerkzeuge sind daher bevorzugt aus harten Materialien hergestellt und umfassen insbesondere Metalle. Bevorzugt sind mit Mischwerkzeugen in der Mischvorrichtung Mischpaddel und Mischwellen gemeint. Für die Entwicklung der Erfindung wurde erkannt, dass das phosphorhaltige Grünkorngemisch aufgrund des Anteiles von Phosphorsäure eine hohe Reaktivität mit metallischen Oberflächen aufweist. Ohne Emaillierung der Mischwerkzeuge der Mischvorrichtung kommt es zu starken Anbackungen des phosphorhaltigen Grünkorngemisches an den metallischen Oberflächen der Mischwerkzeuge. Unter Anbackungen sind insbesondere Anlagerungen des Mischgutes an den Mischwerkzeugen zu verstehen. Ganz insbesondere sind unter Anbackungen solche Anlagerungen von Mischgut zu verstehen, welche aushärten und daher zu permanenten Anlagerungen werden. Zum einen Verringern die Anbackungen den möglichen Durchsatz des phosphorhaltigen Grünkorngemisches und begrenzten somit die Produktivität der Phosphorrecyclinganlage auf 1,5 -2 Tonnen pro Stunde (t/h). Diese bevorzugte Quantifizierung der Produktionsleistung bezieht sich auf das mögliche Durchsatzvolumen des phosphorhaltigen Grünkorngemisches bevorzugt umfassend phosphorhaltige Aschen und Orthophosphorsäure. Unter dem Durchsatzvolumen wird bevorzugt das Volumen verstanden, welches maximal von der Phosphorrecyclingvorrichtung verarbeitet werden kann ohne, dass der Produktionsverlauf durch Anbackungen oder anderweitiger Beeinträchtigungen gestört wird.
Das phosphorhaltige Grünkorngemisch ist ein Zwischenprodukt in der Phosphorrecyclinganlage zur Herstellung von Phosphor- bzw. Mehrnährstoffdüngemittel. Ein erhöhtes Durchsatzvolumen des Grünkorngemisches in der Mischvorrichtung führt daher zu einer erhöhten Produktion von Düngemittel.

Weiterhin führen insbesondere ausgehärtete Anbackungen zu einem starken Verschleiß der Mischwerkzeuge. Überraschenderweise kann durch die Emaillierung der Mischwerkzeuge eine starke Reaktion des säurehaltigen Gemisches mit den Metalloberflächen der Mischwerkzeuge vermieden werden. Dadurch werden Anbackungen des phosphorhaltigen Grünkorngemisches überraschend stark vermindert. Bei einer Verwendung von Keramikmischwerkzeugen bzw. bei mit Keramik beschichteten Mischwerkzeugen kam es beispielsweise nur zu einer geringen Verminderung der Anbackungen. Besonders überraschend war es dabei, dass sogar eine teilweise Emaillierung, welche bevorzugt mindestens 30 % ganz bevorzugt mindestens 50 %, besonders bevorzugt mindestens 70 % und ganz besonders bevorzugt mindestens 90 % der Oberfläche der Mischwerkzeuge abdeckt, ausreicht um Anbackungen zu verhindern. Je höher der Anteil der Oberfläche, welcher emailliert ist, desto stärker werden Anbackungen vermieden. Insbesondere erhöht sich durch die Emaillierung der Oberfläche der Mischwerkzeuge mit mindestens 70 % die Produktionsleistung der Phosphorrecyclinganlage auf mindestens 6 t/h. Diese bevorzugte Quantifizierung der Produktionsleistung bezieht sich auf das Durchsatzvolumen des phosphorhaltigen Grünkorngemisches bevorzugt umfassend phosphorhaltige Aschen und Orthophosphorsäure. Weiterhin führt die Emaillierung der Mischwerkzeuge der Mischvorrichtung mit mindestens 30 % bereits zu einem deutlich verringerten Reinigungsaufwand und somit zu verringerten Stillstandszeiten der Phosphorrecyclingvorrichtung. Zudem ist durch die Emaillierung der Mischwerkzeuge ein deutlich verlängerter Einsatz der Mischwerkzeuge möglich.
Führte der Verschleiß der Mischwerkzeuge in bekannten Phosphorrecyclingvorrichtungen zu einem notwendigen Austausch der Mischwerkzeuge innerhalb von 3 Monaten, so ist durch die Emaillierung der Mischwerkzeuge zu mindestens 50 % eine Nutzung der Mischwerkzeuge über einen Zeitraum von mehr als 1 Jahr möglich.

Weiterhin führt die teilweise Emaillierung der Granulierfläche der Granuliervorrichtung zu einer deutlich erhöhten Produktivität der Phosphorrecyclingvorrichtung. Unter einer Granulierfläche ist dabei bevorzugt die Fläche gemeint, mit der das phosphorhaltige Gemisch in der Granuliervorrichtung in Berührung kommt. Bevorzugt umfasst eine Granuliervorrichtung einen oder mehrere Granulierteller. Unter der Granulierfläche ist daher besonders bevorzugt die produktberührende, innere Fläche des oder der Granulierteller zu verstehen. Unter einer teilweisen Emaillierung der Granulierfläche ist dabei bevorzugt eine Emaillierung der Granulierfläche zu mindestens 30 %, ganz bevorzugt zu mindestens 50 %, besonders bevorzugt zu mindestens 70 % und ganz besonders bevorzugt zu mindestens 90 % gemeint.

Überraschenderweise kommt es durch die teilweise Emaillierung der Granulierfläche der Granuliervorrichtung zu nur noch sehr geringen oder gar keinen Anbackungen des Grünkorngemisches an der Granulierfläche. Dabei werden Anbackungen besonders stark vermieden je höher der Anteil der Granulierfläche ist, die emailliert wird. Der Reinigungsaufwand für die Granuliervorrichtung wird insbesondere bereits ab einer Emaillierung der Granulierfläche zu mindestens 30 % stark vermindert und somit Stillstandszeiten der Phosphorrecyclingvorrichtung vermieden. Durch die teilweise Emaillierung der Granulierfläche ist es zudem möglich, gleichzeitig eine größere Menge von dem phosphorhaltigen Grünkorngemisch der Granuliervorrichtung zuzuführen und erfolgreich zu granulieren. Dies führt zu einer deutlich erhöhten Gesamtproduktionsleistung der Phosphorrecyclingvorrichtung. Im Vergleich zum bekannten Stand der Technik erhöht sich die Produktivität der Phosphorrecyclingvorrichtung, deren Granulierefläche der Granuliervorrichtung zu mindestens 50 % emailliert ist, auf das Dreifache. Völlig überraschend war zudem, dass die teilweise Emaillierung der Granulierfläche der Granuliervorrichtung einen besonders positiven Effekt auf die Qualität des Granulierprozesses hat. Die Emaillierung der Granulierfläche zu mindestens 70 % erhöht den Gutkornanteil bezogen auf die zu granulierende Menge des phosphathaltigen Grünkorngemisches auf mindestens 70 %.

Wie oben beschrieben ist, wird in einer Phosphorrecyclingvorrichtung das Granulat basierend auf der Größe der Granulatkörner unterschiedlich klassifiziert. Die Granulatkorngröße bezieht sich dabei bevorzugt auf den Durchmesser der Granulatkörner. Der Gutkornanteil bezeichnet den Anteil des Granulates, welcher eine Granulatkorngröße von 2 mm bis 5 mm aufweist. Granulat, welches eine höhere Granulatkorngröße aufweist, das sogenannte Überkorn, wird nochmals in die Mischvorrichtung gegeben. Granulat, welches eine geringere Granulatkorngröße aufweist, wird nochmals in der Granuliervorrichtung granuliert. Der sogenannte Gutkornanteil ist geeignet für den Trocknungsprozess und kann zur Herstellung des Phosphat- und Mehrnährstoffdüngemittels verwendet werden. Daher steigert die Emaillierung der Granuliervorrichtung die Effektivität der Phosphorrecyclingvorrichtung qualitativ hochwertige Phosphat- und Mehrnährstoffdüngemittel herzustellen. Dies spiegelt sich zudem in dem geringeren Energieaufwand wider, den die erfindungsgemäße Phosphorrecyclingvorrichtung im Vergleich zum bekannten Stand der Technik aufweist.

In einer bevorzugten Ausführungsform entspricht die Beschichtung mit der Emaille der Güte- und Prüfnorm DIN EN ISO 28721. So weit nicht anderweitig geschrieben ist mit der Güte- und Prüfnorm DIN EN ISO 28721 bevorzugt die Teile 1 bis 3 der DIN EN ISO 28721 in der Ausgabe 2011 gemeint.

Dem Fachmann sind verschiedene Emaillen, Emaillierungen und Emaillierverfahren zur Beschichtung von Oberflächen, insbesondere zur Beschichtung von Metalloberflächen bekannt. Mit dem Begriff der Emaillierung ist bevorzugt das Verfahren zur Beschichtung von Oberflächen mit einer Emaille gemeint, als auch die Emailleschicht, welche durch die Beschichtung einer Oberfläche mit einer Emaille auf dieser aufgetragen wird. Insbesondere ist dem Fachmann bekannt wie eine Emaillierung zu erreichen ist, welche der Güte- und Prüfnorm DIN EN ISO 28721 entspricht. Eine Emaillierung, welche den Kriterien der DIN EN ISO 28271 genügt, ist vorteilhafterweise besonders geeignet um Anbackungen während des Misch- bzw. Granulierprozesses in der Phosphorrecyclingsvorrichtung zu vermindern. Besonders bevorzugt weist die Emaillierung, eine Mohs'sche Härte auf, welche größer ist als die Moh'sche Härte der phosphorhaltigen Ausgangsstoffe. Vorteilhafterweise wird ein Abrieb der Emaillierung während des Mischens oder des Granulierens dadurch stark vermindert. Dabei war es überraschend, dass eine Emaillierung mit genügend hoher Moh'scher Härte hergestellt werden konnte, welche dennoch eine hohe chemische Beständigkeit insbesondere gegenüber dem Einsatz von Phosphorsäure aufweist.

In einer weiteren bevorzugten Ausführungsform weist die Emaillierung eine um mindestens 50 % höhere Verschleißfestigkeit auf als in den Normen der DIN EN ISO 28721 gefordert. Die Herstellung einer Emaillierung mit einer mindestens 50 % höhere Verschleißfestigkeit als in den Normen der DIN EN ISO 28721 gefordert, ist dem Fachmann bekannt. Insbesondere kann ein Fachmann durch Routineversuche eine Emaillebeschichtung herstellen und testen, ob diese eine mindestens 50 % höhere Verschleißfestigkeit, als in den Normen der DIN EN ISO 28721 gefordert, aufweist.

In dem Produktionsprozess in der Phosphorrecyclingvorrichtung führt dies vorteilhafterweise in der Mischvorrichtung zu einem Abrieb der Emaillierung von weniger als 0,2 mm pro Jahr und in der Granuliervorrichtung zu einem Abrieb der Emaillierung von weniger als 0,1 mm pro Jahr. Dies führt zu einer besonders hohen Langlebigkeit der Misch- bzw. Granuliervorrichtung und erhöht die Produktivität der Phosphorrecyclingvorrichtung. Weiterhin führt eine Emaillierung mit erhöhter Verschleißfestigkeit überraschenderweise zudem zu einem gesteigerten Anteil von Gutkorn in der Granuliervorrichtung und somit zu erhöhter Produktqualität und Produktionseffizienz.

Emaillen und Verfahren zur Beschichtung von Oberflächen, insbesondere Metalloberflächen sind dem Fachmann bekannt. Bei bevorzugten Ausführungsformen der Emaillierung werden Ausgangsstoffe für die Emaille zunächst gemahlen. Bevorzugte Ausgangsstoffe für die Emaille umfassen dabei Feldspat, Borax und/oder Quarz. Dadurch entsteht bevorzugt ein Emaillepulver. Dieses Emaillepulver wird bevorzugt eingeschmolzen und durch bevorzugt rasche Abkühlung zu einer Fritte erstarrt. Bevorzugt wird die Fritte gemahlen und mit Wasser und Zusatzstoffen zu einem Emailleschlicker aufgearbeitet. Für die Beschichtung einer Oberfläche wird der Emailleschlicker bevorzugt auf durch Spritzen, Tauchen oder dergleichen auf die Oberfläche aufgebracht. Anschließendes Erhitzen auf eine Temperatur zwischen bevorzugt 700°C und 900°C führt zu einem Einbrennen des Emailleschlickers in die bevorzugt metallische Oberfläche. Durch diesen letzten Schritt ist bevorzugt die Emaillierung abgeschlossen und die Oberfläche ist mit einer Emailleschicht versehen. Bevorzugt können die Schritte des Aufbringens und Einbrennens des Emailleschlicker mehrfach, besonders bevorzugt bis zu 7 Mal wiederholt werden, um eine optimale Schichtdicke der Emaillierung zu erreichen.

In einer besonders bevorzugten Ausführungsform ist die Emaillierung herstellbar durch Schmelzen eines Oxid-Gemisches umfassend 20 - 80 Gew. % Siliziumdioxid, 1 - 30 Gew. % Natriumdioxid und 1 - 15 Gew. % Bariumoxid, zur Bildung einer homogenen Schmelze, Abschrecken der Schmelze zur Bildung einer Fritte, Aufbereitung der Fritte zu einem Emailleschlicker und Brennen des Emailleschlickers. Die bevorzugte Zusammensetzung des Oxid-Gemisches für die Emaillebeschichtung weist dabei überraschender Weise eine besonderes hohe chemische Beständigkeit gegenüber säurehaltigen Ausgangsstoffen des Phosphorrecyclingprozesses auf.

In einer weiteren bevorzugten Ausführungsform wird bei der Emaillierung der Emailleschlicker mit einem keramischen Hartstoff versetzt, ausgewählt aus der Gruppe umfassend Siliziumcarbid, Zirkondioxid und Siliziumdioxid. Dabei war es völlig überraschend, dass die bevorzugten keramischen Hartstoffe die Verschleißfestigkeit der Emaille besonders stark erhöhen und gleichzeitig besonders gute rheologische Eigenschaften des Emailleschllickers sichern. Die dadurch erreichten rheologischen Eigenschaften des Emailleschlickers, d.h. insbesondere ein für die Beschichtung optimiertes Fließverhalten, ermöglichen vorteilhafterweise eine besonders homogene Emaillierung der metallischen Oberflächen der Mischvorrichtung und der Granuliervorrichtung. Weiterhin war es überraschend, dass die bevorzugt zugesetzten keramischen Hartstoffe die chemische Beständigkeit der Emaillebeschichtung gegenüber Säure insbesondere Phosphorsäure zusätzlich erhöhen. Die Emaillierung der Misch- bzw. Granuliervorrichtung unter Zusatz der bevorzugt genannten keramischen Hartstoffe führt zudem zu einer besonderes starken Verminderung von Anbackungen und vermindert den Verschleiß der emaillierten Elemente in besonders starkem Maße. Besonders überraschend war es, dass die Emaillierung zu ein deutlich schnelleren und homogeneren Mischung der phosphorhaltigen Aschen, insbesondere der Klärschlammasche, der Gärresteasche oder der Tiermehlasche führt. Die Emaillebeschichtung der Mischvorrichtung und der Granuliervorrichtung löst somit eine erfindungsgemäße Aufgabe einer Bereitstellung einer Phosphorrecyclingvorrichtung mit hoher Produktivität in besonders hohem Maße. Darüber hinaus führt die bevorzugte Emaillierung zur Produktion eines besonders hochwertigen Phosphordüngemittels.

In einer ganz besonders bevorzugten Ausführungsform handelt es sich bei der Emaille um Abrisist. Bei der Abrisist handelt es sich um eine besonders bevorzugte Emaille, welche sich zu einer Beschaffenheitsangabe entwickelt hat. Die Charakterisierung der besonders bevorzugten Emaille über den Handelsnamen ist daher eindeutig. Eine eindeutigere Charakterisierung Abrisist als über den handelsüblichen Markennamen ist weder möglich noch sinnvoll. Die Abrisist bezieht sich auf eine Emaille, wie sie von der Firma Thaletec GmbH hergestellt wird und auf dem Datenblatt k028 04DE 03/2012 der Firma Thaletec im März 2012 spezifiziert und publiziert wurde. Vorteilhafterweise kann mit der Abrisist Emaille die Korrosion, die Hydroabrasion und der Verschleiß durch die Mischung der phosphorhaltigen Ausgangsstoffe in besonders hohem Maße verhindert werden. Insbesondere weist die Abrisist in Bezug auf die phosphorhaltigen Ausgangsstoffe auf ein überraschend hohe chemische Beständigkeit und Verschleißfestigkeit auf. Zudem war es überraschend, dass eine Beschichtung der Granuliervorrichtung mit der Abrisist Emaille zu einem deutlich erhöhten Gutkornanteil insbesondere bei der Verwendung von Klärschlammasche oder auch Tiermehlasche kommt. Aufgrund ihrer chemischen Beschaffenheit ist die Abrisist Emaille zudem besonders geeignet für die optimale Emaillierung einer Mischvorrichtung zur Mischung der phosphorhaltigen Aschen mit Phosphorsäure. Überraschenderweise führt die Abrisistemaillierung insbesondere zu einer gesteigerten Reaktivität der phosphorhaltigen Ausgangsstoffe und somit zu einem erhöhten Produktionsdurchsatz.

In einer bevorzugten Ausführungsform umfasst die Mischvorrichtung einen Durchlaufmischer und die Mischwerkzeuge mindestens ein Mischpaddel und eine Mischwelle. Durchlaufmischer mit Mischwerkzeugen umfassend ein Mischpaddel und eine Mischwelle sind besonders vorteilhaft, um ein kontinuierliches Zuführen und Mischen der phosphorhaltigen Asche mit den Zuschlagsstoffen und der Phosphorsäure zu erreichen. Vorteilhafterweise sind somit insbesondere die metallischen Oberflächen der Mischvorrichtung emailliert. Dies führt dazu, dass insbesondere jene Flächen der Mischvorrichtung emailliert sind, welche besonders anfällig gegenüber dem reaktiven phosphorsäurehaltigen Grünkorngemisch sind. Durch die teilweise Emaillierung nur dieser Mischwerkzeuge ist ein besonders kostensparender Einsatz der Emaille möglich. Insbesondere werden weiterhin dadurch jene Teile der Mischvorrichtung nicht beschichtet, die durch eine Emaillierung nachteilige Eigenschaften annehmen. Dies betrifft beispielsweise die Trogwand der Mischvorrichtung, welche aus einem nicht-metallischen, flexiblen Material gefertigt sein kann.

In einer weiteren bevorzugten Ausführungsform weist die Granulierfläche des Granuliertellers einen Durchmesser von 2 m bis 5 m bevorzugt ungefähr 3 m auf. Wobei unter ungefähr 3 m beispielsweise 2,8 m, 3,1 m, 3,20 m oder auch 3,0 m gemeint sein können. Diese Abmaße sichern eine besonders platzsparende Integration der Granuliervorrichtung in die Phosphorrecyclingvorrichtung. Weiterhin würde ein Granulierteller mit einem Durchmesser der Granulierfläche, welcher kleinere Abmaße aufweist, als die bevorzugt genannten, das Granulieren nur einer geringen Menge des phosphorhaltigen Grünkorngemisches erlauben. Granulierteller mit einem Durchmesser, welcher kleiner sind, als die bevorzugt genannten Abmaße, vermindern somit die Produktivität der Granuliervorrichtung. Weiterhin ist die bevorzugte Dimensionierung der Granulierfläche nur im Falle der erfindungsgemäßen Emaillierung der Granulierfläche vorteilhaft für die Produktivität der Phosphorrecyclingvorrichtung. Bei Phosphorrecyclingvorrichtungen aus dem bekannten Stand der Technik, welche keine erfindungsgemäße Emaillierung der Granulierfläche aufweisen, führen Durchmesser des Granuliertellers von mehr als 1 m zu unvorteilhaften Verwerfungen des Tellermaterials. Die teilweise Emaillierung der Granulierfläche erlaubt somit erst die bevorzugt genannte Dimensionierung eines Granuliertellers und steigert somit in besonderer Weise die Produktivität der Phosphorrecyclingvorrichtung.

In einer weiteren bevorzugten Ausführungsform umfasst die Mischvorrichtung eine Trogwand, welche ein Elastomer umfasst. Besonders bevorzugt ist die Trogwand aus einem Elastormer gefertigt. Bevorzugt ist die Trogwand weiterhin in einer stabilen Metallkonstruktion eingebettet. Die Eigenschaften des Elastomers führen dazu, dass die Trogwand während des Mischvorganges flexibel auf die Bewegungen des Mischgutes reagiert. Insbesondere wird die ein Elastomer umfassende Trogwand vorteilhafterweise während des Mischvorganges in Schwingungen versetzt. Die Schwingungen der Trogwand führen dazu, dass sich keine Anbackungen des phosphorhaltigen Grünkorngemisches an der Trogwand bilden. Stattdessen wird an der Trogwand haftendes Material periodisch dem Grünkorngemisch im Zentrum der Mischvorrichtung zugeführt. Völlig überraschend erwies sich dabei die Trogwand aus einem Elastomer geeignet, um auch dem säurehaltigen Grünkorngemisch standzuhalten. Insbesondere führt der Säureanteil des Grünkorngemisches überraschenderweise nicht dazu, dass die Trogwand beschädigt wird oder sich die elastischen Eigenschaften des Elastomer vermindern. Die Ausbildung der Trogwand aus einem Elastomer erhöht somit die Effektivität der Mischvorrichtung und Gesamtproduktionsleistung der Phosphorrecyclingvorrichtung.

In einer besonders bevorzugten Ausführungsform wird das Elastomer aus dem die Trogwand gefertigt ist, bevorzugt ausgewählt aus einer Gruppe umfassend Naturkautschuk, Ethylen-Propylen-Dien-Kautschuk, Aethylen-Propylen-Terpolymer-Kautschuk, Chlorsulfonyl-Polyethylen-Kautschuk, Butyl-Kautschuk, Fluor-Kautschuk, Fluor-Karbonkautschuk und/oder Polyurethan-Elastomer. Die bevorzugt genannten Elastomere führen dabei zu besonders vorteilhaften Schwingungseigenschaften der Trogwand während des Mischens. Insbesondere sind die bevorzugt genannten Elastomere überraschend säurebeständig und daher besonders geeignet, um in der Mischvorrichtung zum Mischen des phosphorsäurehaltigen Grünkorngemisches eingesetzt zu werden.

In einer besonders bevorzugten Ausführungsform weist die Trogwand dabei eine bevorzugte Dicke von 3 bis 4 cm ganz bevorzugt von 5 bis 6 cm auf. Trogwände mit einer der bevorzugt genannten Dicken weisen dabei eine besonders vorteilhafte Flexibilität während des Mischvorganges auf und führen somit zu einer besonders effektiven Verminderung von Anbackungen.

In einer weiteren bevorzugten Ausführungsform sind mindestens zwei Produktionseinheiten aus der Menge der Vorlagebehälter, der Mischvorrichtung und der Granuliervorrichtung, auf mindestens zwei Ebenen angeordnet, wobei die Ebenen sich in unterschiedlicher Höhe befinden. Bevorzugt sind die Produktionseinheiten auf Ebenen unterschiedlicher Höhe entsprechend ihrer zeitlichen Abfolge im Herstellungsprozess des Phosphat- und Mehrnährstoffdüngemittel angeordnet. Hierbei befindet sich bevorzugt die Produktionseinheit, welche zuerst im Herstellungsprozess durchlaufen wird, auf der höchsten Ebene und die Produktionseinheit, welche zuletzt im Produktionsprozess durchlaufen wird, auf der untersten Ebene. In einer besonders bevorzugten Ausführungsform umfasst die Phosphorrecyclingvorrichtung eine Metallkonstruktion mit drei vertikal übereinander angeordneten Ebenen, wobei sich die Vorlagebehälter auf einer ersten, oberen Ebene, die Mischeinrichtung auf einer zweiten, mittleren Ebene und die Granuliervorrichtung auf einer dritten, unteren Ebene befinden. Bei bekannten Phosphorrecyclingvorrichtungen aus dem Stand der Technik sind die Vorlagebehälter, die Mischvorrichtung und die Granuliervorrichtung horizontal in einer Ebene, d.h. auf derselben Höhe, angeordnet. Der Transport der phosphorhaltigen Zwischengemische erfolgt im bekannten Stand der Technik zumeist durch sogenannte Schneckensysteme oder andere Förderketten. Durch die Höhenunterschiede zwischen den Produktionseinheiten in dieser bevorzugten Ausführungsform der Phosphorrecyclingvorrichtung ist es vorteilhafterweise möglich, den Einsatz von energieaufwändigen schnell verschleißenden Fördermitteln zu begrenzen. Die vertikale Anordnung der Produktionseinheiten nutzt dabei die Gravitation aus und ermöglicht somit eine passive, energiesparsame Beförderung der Ausgangsstoffe und der Ausgangsstoffgemische zwischen den Produktionseinheiten. Dabei war es überraschend, dass die Gravitiationskraft zu einer für die Produktion optimalen Beförderungsgeschwindingkeit der Ausgangsstoffe und Ausgangsstoffgemischen führt. Insbesondere wird durch die stetige, gleichmäßige Beförderung entlang der Höhenunterschiede die Bildung von Staub vermieden. Dadurch bedarf die Phosphorrecyclingvorrichtung einer besonders geringen Wartung und weist eine besonders hohe Umweltfreundlichkeit auf.

In einer weiteren bevorzugten Ausführungsform umfasst die Vorrichtung Fördermittel, welche die Vorlagebehälter, die Mischeinrichtung und die Granuliervorrichtung miteinander verbinden und staubdicht ausgeführt sind. Die Fördermittel können dabei bevorzugt passive Fördermittel sein, welche wie im vorherigen Abschnitt beschrieben die Gravitationskraft und das Eigengewicht der Ausgangsstoffe oder der Ausgangstoffgemische ausnutzen. Die Fördermittel können jedoch auch aktive Fördermittel, wie beispielsweise Schneckensysteme, umfassen. Durch die staubdichte Ausführung der Fördermittel wird vorteilhafterweise der Reinigungsaufwand und der Aufwand für die Instandsetzung der Phosphorrecyclingvorrichtung stark vermindert. Weiterhin wird durch die staubdichte Ausführung die Effizienz der Phosphorrecyclingvorrichtung in besonderem Maße gesteigert.

In einer weiteren bevorzugten Ausführungsform umfasst die Phosphorrecyclingvorrichtung eine Vorrichtung zur Röntgenfluoreszenzanalyse, eine automatisierte Probenentnahmevorrichtung zur Vorlage der Ausgangsstoffe für die Röntgenfluoreszenzanalyse und Mittel zur Speicherung, Verarbeitung und/oder Übertragung der Messdaten der Vorrichtung zur Röntgenfluoreszenzanalyse. Verfahren und Vorrichtungen zur Durchführung einer Röntgenfluoreszenzanalyse sind dem Fachmann bekannt. Bevorzugt wird bei der Röntgenfluoreszenzanalyse die zu messende Probe mit Röntgenstrahlung oder Ionenstrahlung angeregt. Dabei werden kernnahe Elektronen von inneren Schalen des Atoms herausgeschlagen. Dadurch können Elektronen aus höheren Energieniveaus zurückfallen. Die dabei freiwerdende Energie wird in Form von elementspezifischer Fluoreszenzstrahlung abgegeben. Diese Fluoreszenzstrahlung kann von einem Detektor ausgewertet werden. Die Röntgenfluoreszenzanalyse ermöglicht somit eine Identifizierung und Konzentrationsbestimmung aller Elemente, insbesondere ab einer Ordnungszahl von Z = 12, in den unterschiedlichsten Zusammensetzungen. Durch die Mittel zur Speicherung, Verarbeitung und/oder Übertragung der Messdaten der Vorrichtung zur Röntgenfluoreszenzanalyse können die Messdaten ausgewertet und ein chemisches Profil der Ausgangsstoffe bestimmt werden. Vorteilhafterweise eignet sich die Röntgenfluoreszenzanalyse dabei insbesondere für die Bestimmung des Phosphatgehaltes der Ausgangsstoffe für die Herstellung des Phosphat- und Mehrnährstoffdüngemittels. Unter dem Phosphatgehalt oder der Phosphatkonzentration der Ausgangsstoffe sowie der Fertigprodukte, d.h. des Düngemittels, wird bevorzugt der Gehalt von P₂O₅ an der Gesamtmenge verstanden.

Weiterhin können vorteilhafterweise durch die Vorrichtung zur Durchführung einer Röntgenfluoreszenzanalyse auch kleine Verunreinigungen wie beispielsweise Schwermetalle mit einer hohen Ordnungszahl nachgewiesen werden. Insbesondere können mit Hilfe der Röntgenfluoreszenzanalyse Schadstoffe präzise nachgewiesen werden. Unter Schadstoffen sind dabei insbesondere jene Schadstoffe zu verstehen, welche in der Düngemittelverordnung (DüMV) als Schadstoffe aufgelistet sind. Dazu gehören zum Beispiel Arsen, Cadmium, Chrom, Blei, Quecksilber oder Thallium. Somit erlaubt die bevorzugte Phosphorrecyclingvorrichtung eine besonders zuverlässige Qualitätskontrolle der Ausgangsstoffe und des Düngemittelendproduktes. Zudem können mit dieser bevorzugten Ausführungsform der Phosphorrecyclingvorrichtung die Ergebnisse der Röntgenfluoreszenzanalyse der Ausgangsstoffe gespeichert und dem daraus produzierten Ausgangsstoff zugeordnet werden. Dies ermöglicht vorteilhafterweise das Führen eines Qualitätskontrollbuches und eine entsprechende Klassifizierung des Düngemittels. Durch die automatische Probenentnahmevorrichtung ist es dabei weiterhin vorteilhafterweise möglich kontinuierlich während des Produktionsprozesses Proben der Ausgangsstoffe zu entnehmen und diese chemisch zu analysieren. Dadurch ist eine kontinuierliche Qualitätskontrolle möglich, die es zudem erlaubt, in den Produktionsprozess einzugreifen. Wird beispielsweise eine Charge mit einem Ausgangsstoff geliefert, welcher einen besonders hohen Schadstoffanteil aufweist, so kann dieser Mangel während der Produktion erkannt und ggf. behoben werden.

In einer besonders bevorzugten Ausführungsform umfasst die Phosphorrecyclingvorrichtung weiterhin eine computergesteuerte Prozesssteuerungsvorrichtung, welche das Mischverhältnis der Ausgangsstoffe basierend auf den Messdaten der Röntgenfluoreszenzanalyse steuert. Computergesteuerte Prozesssteuerungsvorrichtungen für Phosphorrecyclingvorrichtung sind dem Fachmann bekannt. Bevorzugt umfasst die computergesteuerte Prozesssteuerungsvorrichtung eine Dosierwaage und eine Dosierpumpe zur Steuerung der Menge jeweils an phosphorhaltiger Asche und an Phosphorsäure, welche aus den Vorlagebehältern der Mischvorrichtung zugeführt wird. Bevorzugt wird durch die computergesteuerte Prozesssteuerungsvorrichtung das Mischverhältnis der Ausgangsstoffe entsprechend einer Produktionsmatrix eingestellt. Soll beispielsweise ein Phosphatdüngemittel mit 38 % Phosphatanteil durch die Mischung von Klärschlammasche mit einem Phosphatanteil von 22 % und Phosphorsäure mit einer Phosphatkonzentration von 54 % hergestellt werden, so legt die Produktionsmatrix ein Mischverhältnis von gleichen Gewichtsanteilen aus Klärschlammasche und Phosphorsäure fest.

Bevorzugt ist es weiterhin mit Hilfe der automatisierten Probenentnahme zur Röntgenfluoreszenzanalyse möglich, kontinuierlich die Phosphatkonzentration der Ausgangsstoffe zum Beispiel der Klärschlammasche oder der Phosphorsäure während des Produktionsprozesses zu messen. Durch die computergesteuerte Prozesssteuerungsvorrichtung, welche das Mischverhältnis der Ausgangsstoffe basierend auf den Messdaten der Röntgenfluoreszenzanalyse steuert, ist es somit bevorzugt möglich, kontinuierlich das optimale Mischverhältnis für die Herstellung eines Düngemittels einzustellen. Insbesondere ist es dadurch möglich ein Düngemittel mit einem besonders konstanten Phosphatanteil zum Beispiel von 38 % herzustellen. Die bevorzugte Ausführungsform der Phosphorrecyclingvorrichtung garantiert somit im besonderen Maße eine hohe Qualität des Endproduktes. Insbesondere ist es auch möglich, den Säureanteil der Phosphorsäure zur Einstellung der Löslichkeit des Phosphates optimal einzustellen. Weiterhin ist es vorteilhafterweise möglich, verschiedene sekundäre Phosphorquellen mit variierenden Phosphatanteilen für die Herstellung des Phosphatdüngemittels mit einem konstanten Phosphatanteil zu nutzen. Aus ökonomischer und ökologischer Sicht stellt dies einen besonderen Vorteil der bevorzugten Ausführungsform der Phosphorrecyclingvorrichtung gegenüber dem bekannten Stand der Technik dar. Um mit Phosphorrecyclingvorrichtungen aus dem bekannten Stand der Technik ein Phosphatdüngemittel mit einem konstanten Phosphatanteil herzustellen, musste die zugeführte phosphorhaltige Aschen ebenso einen konstanten Phosphatanteil zum Beispiel von 18 - 20 % aufweisen. Aus diesem Grunde wurde im bekannten Stand der Technik zumeist nur Klärschlammasche für die Herstellung von Phosphatdüngemitteln verwandt. Phosphorhaltige Aschen, die aus Gärresten, Tiermehl oder Gülle durch Verbrennung gewonnen wurden, konnten nicht eingesetzt werden, da ihr Phosphatanteil stark schwankt. Die bevorzugte computergesteuerte Prozesssteuerungsvorrichtung zur Einstellung des Mischverhältnis der Ausgangsstoffe basierend auf derer Phosphatkonzentration ermöglicht vorteilhafterweise die Herstellung eines Phosphatdüngemittel mit konstanter Phosphatkonzentration selbst bei schwankendem Phosphatanteil der Ausgangsstoffe.

Zu dem betrifft die Erfindung ein Verfahren zur Herstellung von Phosphat- und Mehrnährstoffdüngemittel umfassend folgende Schritte
- Beförderung eines ersten Ausgangsstoffes, umfassend eine Orthophosphorsäure, zu einem ersten Vorlagebehälter
- Beförderung eines zweiten Ausgangsstoffes, umfassend eine phosphorhaltigen Asche, welche aus der thermischen Mineralisierung von organischen Material gewonnen wurde, zu einem zweiten Vorlagebehälter
- Entnahme von Proben von mindestens einem Ausgangsstoff zur Vorlage für die Vorrichtung zur Röntgenfluoreszenzanalyse, wobei die Entnahme der Proben bevorzugt auf dem Beförderungsweg zu den Vorlagebehältern erfolgt
- Durchführung einer Röntgenfluoreszenzanalyse der Proben und Bestimmung von Parametern umfassend den Phosphatgehalt und/oder den Schadstoffgehalt für mindestens einen Ausgangsstoff

Gegenüber bekannten Verfahren zur Herstellung von Phosphat- und Mehrnährstoffdüngemitteln umfasst das erfindungsgemäße Verfahren insbesondere Schritte zur automatisieren Analyse der Ausgangsstoffe mit Hilfe eines Röntgenfluoreszenzverfahren. Die in oberen Absätzen beschriebenen Vorteile, die sich durch die Integration von Mitteln zur Röntgenfluoreszenzanalyse der Ausgangsstoffe in die erfindungsgemäße Phosphorrecyclingvorrichtung ergeben, gelten somit auch für das erfindungsgemäße Verfahren. Insbesondere ist durch ein solches Verfahren vorteilhafterweise eine Qualitätskontrolle der Ausgangsstoffe möglich. Dies betrifft insbesondere die Detektion von Schadstoffen wie zum Beispiel Arsen, Cadmium, Chrom, Blei, Quecksilber oder Thallium, wodurch eine Klassifizierung der Düngemittel entsprechend ihres Schadstoffgehaltes möglich ist. Weiterhin erlaubt das Verfahren vorteilhafterweise die Messung der Phosphatkonzentration der Phosphorsäure und des Phosphatanteils der phosphorhaltigen Aschen.

In einer besonders bevorzugten Ausführungsform ist das Verfahren zur Herstellung von Phosphat- und Mehrnährstoffdüngemittel dadurch gekennzeichnet, dass die Produktionsmatrix, welche das Mischverhältnis der Ausgangsstoffe festlegt, berechnet wird in Abhängigkeit von den Parametern der Ausgangsstoffe, welche durch die Röntgenfluoreszenzanalyse bestimmt wurden. Bevorzugt erfolgt die Zuführung der Ausgangsstoffe in die Mischvorrichtung entsprechend dem von der Produktionsmatrix festgelegten Mischverhältnis mit Hilfe einer computergesteuerten Prozesssteuerungsvorrichtung. Bevorzugte Parameter sind der Phosphatgehalt der phosphorhaltigen Asche und die Phosphatkonzentration der Phosphorsäure. Soll beispielsweise ein Phosphatdüngemittel mit 38 % Phosphatanteil durch die Mischung von Klärschlammasche mit einem Phosphatanteil von 24 % und Phosphorsäure mit einer Phosphatkonzentration von 52 % hergestellt werden, so bestimmt die berechnete Produktionsmatrix das Mischverhältnis von Phosphorsäure und phosphorhaltiger Asche zu gleichen Gewichtsanteilen. Vorteilhafterweise ist es dadurch insbesondere möglich, den Produktionsprozess kontinuierlich auf den Phosphatgehalt der phosphorhaltigen Aschen anzupassen. Dies erlaubt die Herstellung eines Phosphat- und Mehrnährstoffdüngemittels mit einem konstanten Phosphatanteil unabhängig von Schwankungen des Phosphatanteiles der Ausgangsstoffe.

Bevorzugt wird in dem Verfahren zur Herstellung von Phosphat- und Mehrnährstoffdüngemittel die phosphorhaltige Asche ausgewählt aus einer Gruppe umfassend Klärschlammasche, Gärrestasche, Tiermehlasche und/oder Güllefeststoffasche. Aufgrund ihres häufigen Vorkommens sind kommunaler Klärschlamm, Gärreste, Tiermehl oder Gülle aus wirtschaftlicher Sicht besonders relevante sekundäre Phosphorquellen. Weiterhin kann durch thermische Mineralisierung insbesondere durch eine Wirbelschichtverbrennung dieser eine phosphorhaltige Asche gewonnen werden, welche einen hohen Phosphatanteil (größer als 20 %) aufweist, bei nur geringem Schadstoffanteil. Trotz ihrer ökonomischen Relevanz wurden in bekannten Verfahren Gärresteasche, Tiermehlasche oder Güllefeststoffasche nicht zur Herstellung eines Phosphat- und Mehrnährstoffdüngemittels verwendet. Insbesondere weisen Gärresteasche, Tiermehlasche oder Güllefeststoffasche schwankenden Phosphatanteile von 20 bis 30 % auf. In bekannten Verfahren zur Herstellung von Phosphat- und Mehrnährstoffdüngemitteln erschwerte dies den Produktionsprozess und führte zu stark schwankender Qualität des Endproduktes. Vorteilhafterweise beseitigt das beschriebene bevorzugte Verfahren diese Mängel aus dem Stand der Technik. Somit ist es mit dem bevorzugten Verfahren möglich eine Vielzahl verschiedener phosphorhaltiger Aschen zur Herstellung von einem Phosphat- und Mehrnährstoffdüngemittel zu nutzen.

Weiterhin ist das Verfahren zur Herstellung von Phosphat- und Mehrnährstoffdüngemittel bevorzugt dadurch gekennzeichnet, dass mindestens einer durch die Röntgenfluoreszenzanalyse bestimmte Parameter für mindestens einen Ausgangsstoff gespeichert wird und der Parameter dem Phosphat- und Mehrnährstoffdüngemittel zugeordnet wird, welches unter mindestens teilweiser Zugabe von diesem Ausgangsstoff hergestellt wurde. Bevorzugte Parameter sind die Anteile von Schadstoffen in den Ausgangsstoffen zum Beispiel die Konzentration von Arsen, Cadmium, Chrom, Blei, Quecksilber oder Thallium in den phosphorhaltigen Aschen. Durch die Zuordnung der Parameter der Ausgangsstoffe zu dem daraus hergestellten Phosphat- und Mehrnährstoffdüngemittel kann eine besonders hohe Qualitätssicherung des Phosphat- und Mehrnährstoffdüngemittel erreicht werden. Insbesondere kann das Düngemittel entsprechend der bestimmten Parameter unterschiedlich klassifiziert werden. Bei einem hohen Schadstoffanteil einer bestimmten Charge der Ausgangsstoffe kann die Produktion von Düngemitteln aus dieser Charge vermieden werden Die Zuordnung der Messdaten der Ausgangsstoffe zu dem Endprodukt des Düngemittels kann bevorzugt chargenweise für jede Füllung der Vorlagebehälter erfolgen. Die Zuordnung der Messdaten der Ausgangsstoffe zu dem Endprodukt des Düngemittels kann aber auch kontinuierlich erfolgen. Hierzu wird beispielsweise mit den Messdaten über die Ausgangsstoffe der Zeitpunkt der Probenentnahme gespeichert. Da die Zeitdifferenz in dem Produktionsprozess zwischen Probenentnahme und Abfüllung des Düngemittels relativ konstant ist, kann über diese Zeitmessung eine eindeutige Zuordnung erfolgen.

Die Erfindung betrifft im Weiteren die Verwendung einer oder mehrere der bevorzugten Ausführungsform der erfindungsgemäßen Phosphorrecyclingvorrichtung zur Herstellung von Phosphat- und Mehrnährstoffdüngemittel. Bevorzugt wird dabei das erfindungsgemäße Verfahren zur Herstellung von Phosphat- und Mehrnährstoffdüngemitteln verwandt.

Im Folgenden soll die Erfindung an Hand von Beispielen näher erläutert werden, ohne auf diese beschränkt zu sein.

Es wird darauf hingewiesen, dass verschiedene Alternativen zu den beschriebenen Ausführungsformen der Erfindung verwendet werden können, um die Erfindung auszuführen und zu der erfindungsgemäßen Lösung zu gelangen. Die erfindungsgemäße Vorrichtung und das erfindungsgemäße Verfahren beschränken sich in ihren Ausführungen somit nicht auf die vorstehenden bevorzugten Ausführungsformen. Vielmehr sind eine Vielzahl von Ausgestaltungsvarianten denkbar, welche von der dargestellten Lösung abweichen können. Ziel der Ansprüche ist es, den Schutzumfang der Erfindung zu definieren. Der Schutzumfang der Ansprüche ist darauf gerichtet, die erfindungsgemäße Vorrichtung und das Verfahren sowie äquivalente Ausführungsformen von diesen abzudecken.

Kurzbeschreibung der Abbildungen
- Fig. 1: schematische Skizze einer Phosphorrecyclinganlage aus dem Stand der Technik
- Fig. 2: schematische Skizze einer bevorzugten Ausführungsform der erfindungsgemäßen Phosphorrecyclinganlage

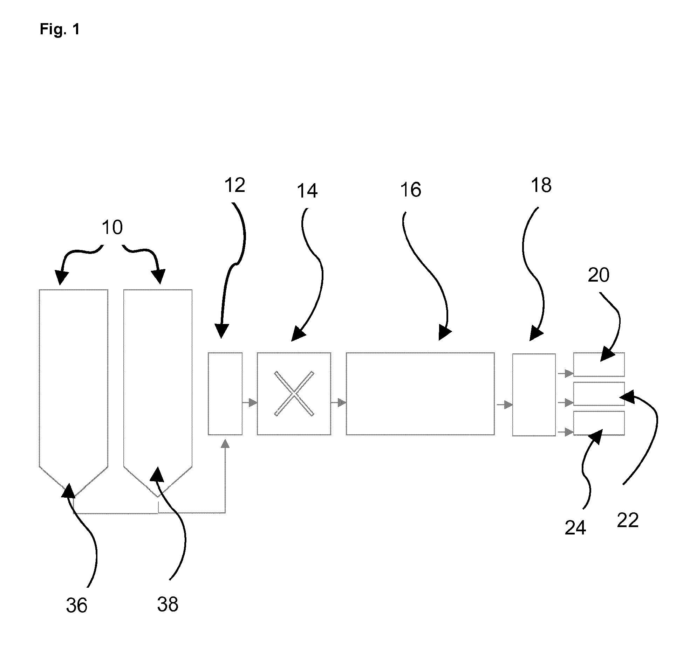

In Fig. 1 ist eine Phosphorrecyclinganlage schematisch dargestellt wie sie im Stand der Technik zur Herstellung eines Phosphat- und Mehrnährstoffdüngemittels verwandt wird. Die Pfeile kennzeichnen den Transport der Ausgangsstoffe bzw. Zwischenprodukte zwischen den einzelnen Produktionseinheiten. Ein erster Vorlagebehälter 10 wird mit phosphorhaltiger Klärschlammasche 36 befüllt. Die phosphorhaltige Klärschlammasche 36 kann durch thermische Mineralisierung von kommunalem Klärschlamm gewonnen werden. Ein zweiter Vorlagebehälter wird mit Orthophosphorsäure 38 befüllt. Die beiden phosphathaltigen Ausgangsstoffe, d.h. die Klärschlammasche 36 und die Orthophosphorsäure 38, werden einer Dosierwage 12 zugeführt. Die Dosierwaage 12 stellt das Mengenverhältnis der beiden Ausgangsstoffe zueinander ein. Von der Dosierwaage 12 werden die phosphorhaltige Klärschlammasche 36 und die Orthophosphorsäure 38 in einen Mischer 14 gegeben. Das durch die Mischung entstehende phosphorhaltige Gemisch bezeichnet man als Grünkorngemisch. Das Grünkorngemisch wird anschließend in einen Drehrohrtrockner 16 transportiert und dort auf den vorbestimmten Feuchtegehalt eingestellt. Vom Drehrohrtrockner 16 wird das phosphorhaltige Gemisch weiter in eine Fraktioniervorrichtung 18 geleitet. In der Fraktioniervorrichtung 18 wird das phosphorhaltige Gemisch durch Fraktionsabsackung in Oberkorn 20 , Gutkorn 22 und Unterkorn 24 getrennt. Gutkorn 22 ist durch eine Granulatgröße von 2 mm bis 5 mm gekennzeichnet, welche sich besonders gut als Phosphat- und Mehrnährstoffdüngemittel eignet.

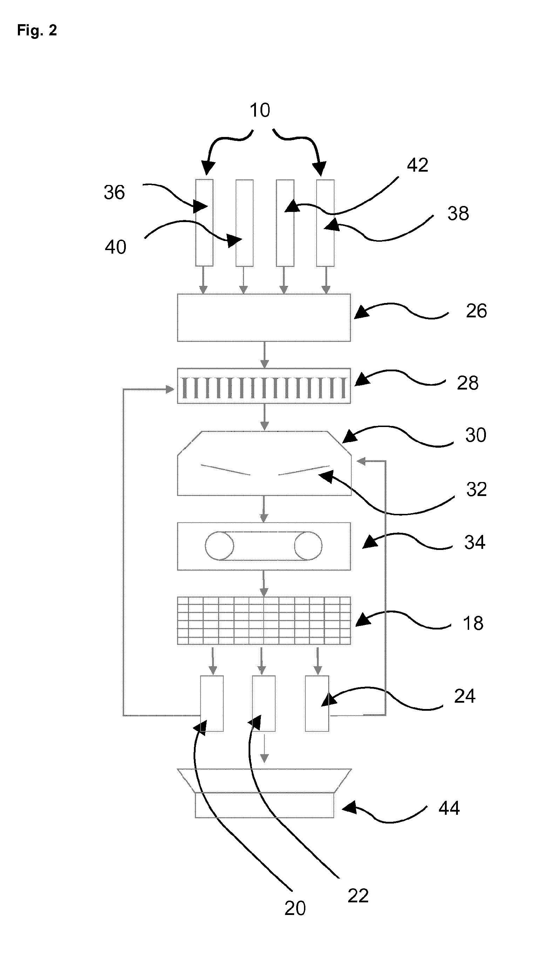

In Fig. 2 ist eine bevorzugte Ausführungsform der erfindungsgemäßen Phosphorrecyclinganlage zur Herstellung eines Phosphat- und Mehrnährstoffdüngemittels schematisch dargestellt. Die Pfeile kennzeichnen den Transport der Ausgangsstoffe bzw. Zwischenprodukte zwischen den einzelnen Produktionseinheiten. Ein erster Vorlagebehälter 10 wird mit phosphorhaltiger Klärschlammasche 36, ein zweiter Vorlagebehälter 10 wird mit phosphorhaltiger Gärresteasche 40, ein dritter Vorlagebehälter wird phosphorhaltiger Tiermehlasche 42 und ein vierter Vorlagebehälter 10 wird mit Orthophosphorsäure 38 befüllt. Die phosphorhaltigen Aschen, d.h. die Klärschlammasche 36, die Gärresteasche 38 und die Tiermehlasche 42, werden durch thermische Mineralisierung gewonnen. Die phosphorhaltigen Ausgangsstoffe werden einer Dosiervorrichtung 26 zugeführt die volumetrisch die Menge der Ausgangsstoffe regelt. Zu diesem Zweck eignet sich für die phosphathaltigen Aschen bevorzugt eine Dosierwaage und für die Orthophosphorsäure eine Dosierpumpe. In der Dosiervorrichtung wird das Mengenverhältnis der Ausgangsstoffe entsprechend einer Produktionsmatrix eingestellt und anschließend in die Mischvorrichtung 28 geleitet. Bei der Mischvorrichtung 28 handelt es sich um einen hochleistungsfähigen Durchlaufmischer mit einer Trogwand aus Starkgummi. Die Mischvorrichtung umfasst dabei insbesondere Mischwerkwerkzeuge wie eine Mischerwelle und Mischpaddel. Die Mischwerkzeuge sind aus Metall gefertigt und mit der erfindungsgemäßen Emaille beschichtet. In der Mischvorrichtung 28 werden die Ausgangsstoffe, d.h. die phosphorhaltigen Aschen und die Orthophosphorsäure, vermengt. Die Mischzeit beträgt 1 bis 2 Minuten. Das entstehende Gemisch wird als Grünkorngemisch bezeichnet. Von der Mischvorrichtung wird das Grünkorngemisch in die Granuliervorrichtung 30 befördert. Die Granuliervorrichtung 30 weist zwei Granulierteller 32 auf, deren Granulierfläche mit der erfindungsgemäßen Emaille beschichtet sind. Durch die erfindungsgemäße Emaillierung der Granulierfläche wird das Grünkorngemisch in der Granuliervorrichtung 30 besonders effektiv granuliert. Das entstehende phosphorhaltige Granulatgemisch wird anschließend in eine Fraktioniervorrichtung 18 transportiert und entsprechend der Granulatkorngröße in Oberkorn 20, Gutkorn 22 und Unterkorn 24 aufgeteilt. Oberkorn 20 entspricht einer Granulatkorngröße von mehr als 5 mm und wird in die Mischvorrichtung rücküberführt. Unterkorn 24 entspricht einer Granulatkorngröße von weniger als 2 mm und wird in die Granuliervorrichtung rücküberführt. Gutkorn 22 ist durch eine Granulatkorngröße von 2 mm bis 5 mm gekennzeichnet und ist als Phosphatdüngemittel geeignet. Das Gutkorn 22 wird daher in die Abfertigungsvorrichtung 44 überführt und als Phosphat- und Mehrnährstoffdüngemittel abgepackt und von dort abtransportiert.

### Produktionsbeispiele

Im Folgenden soll das erfindungsgemäße Verfahren zur Herstellung von Phosphat- und Mehrnährstoffdüngemittel anhand von Produktionsbeispielen näher erläutert werden, ohne auf diese beschränkt zu sein. Wie oben beschrieben umfasst eine bevorzugte Ausführungsform der erfindungsgemäßen Phosphorrecyclingvorrichtung Mittel zur Durchführung einer Röntgenfluoreszenzanalyse. Mit Hilfe der Mittel zur Durchführung einer Röntgenfluoreszenzanalyse kann insbesondere die Phosphatkonzentration, d.h. bevorzugt die Konzentration von P₂O₅, der Ausgangsstoffe bestimmt werden. Bei den Ausgangsstoffen handelt es sich insbesondere um phosphathaltige Aschen und die Orthophosphorsäure. Eine Produktionsmatrix bestimmt basierend auf den Werten der Phosphatkonzentration der Ausgangsstoffe das Mischverhältnis der Ausgangsstoffe, welches für das Fertigprodukt, d.h. das Phosphat- bzw. Mehrnährstoffdüngemittel, die erforderliche Phosphatkonzentration erreicht. Eine Dosiervorrichtung umfassend eine Zudosierund Verwiegeeinheit stellt das Mischverhältnis der Ausgangsstoffe ein. Die Mischzeit der Ausgangsstoff beträgt 1- 2 min.

In den folgenden Produktionsbeispielen sind die Ausgangsstoffe aufgeführt. Weiterhin ist die Phosphatkonzentration der Ausgangsstoffe aufgelistet, welche mit Hilfe der Röntgenfluoreszenzanalyse bestimmt wurde. Daraus wird gemäß der zu erzielende Phosphatkonzentration im Fertigprodukt der Mengenanteil der Ausgangsstoffe für die Mischung berechnet und verwogen. Die Zielgröße für die Phosphatkonzentration im Fertigprodukt, d.h. im Phosphat- und Mehrnährstoffdüngemittel, ist ebenfalls angegeben.

### Beispiel 1

Zielgröße für die Phosphatkonzentration (P₂O₅) im Fertigprodukt, d.h. im Phosphatdüngemittel : 38 %.

| Ausgangsstoff | Phosphatkonzentration (Konzentration P₂O₅) | Mengenanteil des Ausgangsstoffes am Gemisch |
|---|---|---|
| Orthophosphorsäure (H₃PO₄) | 54% | 33% |
| Klärschlammasche | 18% | 36% |
| Dicalziumphosphat | 40 % | 31 % |

### Beispiel 2

Zielgröße für die Phosphatkonzentration (P₂O₅) im Fertigprodukt, d.h. im Phosphatdüngemittel : 38 %.

| Ausgangsstoff | Phosphatkonzentration (Konzentration P₂O₅) | Mengenanteil des Ausgangsstoffes am Gemisch |
|---|---|---|
| Orthophosphorsäure (H₃PO₄) | 54 % | 39% |
| Güllfeststoffasche | 32 % | 29% |
| Klärschlammasche | 18 % | 32% |

### Beispiel 3

Zielgröße für die Phosphatkonzentration (P₂O₅) im Fertigprodukt, d.h. im Phosphatdüngemittel : 38 %.

| Ausgangsstoff | Phosphatkonzentration (Konzentration P₂O₅) | Mengenanteil des Ausgangsstoffes am Gemisch |
|---|---|---|
| Orthophosphorsäure (H₃PO₄) | 54 % | 39% |
| Klärschlammasche | 18 % | 30,5 % |
| Tiermehlasche | 30 % | 29,5 % |

### Bezugszeichenliste

- 10: Vorlagebehälter
- 12: Dosierwaage
- 14: Mischer
- 16: Drehrohrtrockner
- 18: Fraktioniervorrichtung
- 20: Oberkorn
- 22: Gutkorn
- 24: Unterkorn
- 26: Dosiervorrichtung
- 28: Mischvorrichtung
- 30: Granuliervorrichtung
- 32: Granulierteller
- 34: Bandtrockner
- 36: Klärschlammasche
- 38: Orthophosphorsäure
- 40: Gärresteasche
- 42: Tiermehlasche

## Patentansprüche

1. Phosphorrecyclingvorrichtung zur Herstellung von einem Phosphat- und Mehrnährstoffdüngemittel umfassend Vorlagebehälter für mindestens einen phosphorhaltigen Ausgangsstoff, eine Mischvorrichtung umfassend Mischwerkzeuge und eine Granuliervorrichtung mit einer Granulierfläche
**dadurch gekennzeichnet, dass**
die Mischwerkzeuge der Mischvorrichtung und/oder die Granulierfläche der Granuliervorrichtung mindestens teilweise emailliert sind.

2. Phosphorrecyclingvorrichtung nach einem der vorherigen Ansprüche
**dadurch gekennzeichnet, dass** die Emaillierung der Güte- und Prüfnorm DIN EN ISO 28721 entspricht, wobei die Emaillierung bevorzugt eine Mohs'sche Härte aufweist, welche größer als die Mohs'sche Härte der Ausgangsstoffe ist.

3. Phosphorrecyclingvorrichtung nach einem der vorherigen Ansprüche
**dadurch gekennzeichnet, dass** die Emaillierung eine um mindestens 50 % höhere Verschleißfestigkeit aufweist als in den Normen DIN EN ISO 28721 gefordert.

4. Phosphorrecyclingvorrichtung nach einem der vorherigen Ansprüche
**dadurch gekennzeichnet, dass** für die Emaillierung ein Emailleschlicker mit einem keramischen Hartstoff versetzt wird ausgewählt aus der Gruppe umfassend Siliziumcarbid, Zirkondioxid und Siliziumdioxid.

5. Phosphorrecyclingvorrichtung nach einem der vorherigen Ansprüche
**dadurch gekennzeichnet, dass** die Mischvorrichtung einen Durchlaufmischer umfasst und die Mischwerkzeuge mindestens ein Mischpaddel und eine Mischwelle umfassen.

6. Phosphorrecyclingvorrichtung nach einem der vorherigen Ansprüche
**dadurch gekennzeichnet, dass** die Granulierfläche des Granuliertellers einen Durchmesser von 2 - 5 m, bevorzugt 3 m aufweist.

7. Phosphorrecyclingvorrichtung nach dem vorherigen Anspruch **dadurch gekennzeichnet, dass** die Mischvorrichtung eine Trogwand umfasst, welche mindestens teilweise einen Elastomer umfasst.

8. Phosphorrecyclingvorrichtung nach einem der vorherigen Ansprüche **dadurch gekennzeichnet, dass** zwischen mindestens zwei Produktionseinheiten aus der Menge der Vorlagebehälter, der Mischvorrichtung und der Granuliervorrichtung ein Höhenunterschied besteht.

9. Phosphorrecyclingvorrichtung nach einem der vorherigen Ansprüche **dadurch gekennzeichnet, dass** die Vorrichtung Fördermittel umfasst, welche die Vorlagebehälter, die Mischeinrichtung und die Granuliervorrichtung miteinander verbinden und staubdicht ausgeführt sind.

10. Phosphorrecyclingvorrichtung nach einem der vorherigen Ansprüche **dadurch gekennzeichnet, dass** die Phosphorrecyclingvorrichtung eine Vorrichtung zur Röntgenfluoreszenzanalyse, eine automatisierte Probenentnahmevorrichtung zur Vorlage der Ausgangsstoffe für die Röntgenfluoreszenzanalyse und Mittel zur Speicherung, Verarbeitung und/oder Übertragung der Messdaten der Vorrichtung zur Röntgenfluoreszenzanalyse umfasst.

11. Phosphorrecyclingvorrichtung nach einem der vorherigen Ansprüche **dadurch gekennzeichnet, dass** die Phosphorrecyclingvorrichtung eine computergesteuerte Prozesssteuerungsvorrichtung umfasst, welche das Mischverhältnis der Ausgangsstoffe basierend auf den Messdaten der Röntgenfluoreszenzanalyse steuert.

12. Verfahren zur Herstellung von Phosphat- und Mehrnährstoffdüngemittel unter Nutzung einer Phosphorrecyclingvorrichtung nach einem der vorherigen Ansprüche umfassend folgende Schritte
- Beförderung eines ersten Ausgangsstoffes, umfassend eine Orthophosphorsäure, zu einem ersten Vorlagebehälter
- Beförderung eines zweiten Ausgangsstoffes, umfassend eine phosphorhaltigen Asche zu einem zweiten Vorlagebehälter
- Entnahme von Proben von mindestens einem Ausgangsstoff zur Vorlage für die Vorrichtung zur Röntgenfluoreszenzanalyse, wobei die Entnahme der Proben bevorzugt auf dem Beförderungsweg zu den Vorlagebehältern erfolgt
- Durchführung einer Röntgenfluoreszenzanalyse der Proben und Bestimmung von Parametern umfassend den Phosphatgehalt und/oder den Schadstoffgehalt für mindestens einen Ausgangsstoff

13. Verfahren nach dem vorherigen Anspruch **dadurch gekennzeichnet, dass** eine Produktionsmatrix, welche das Mischverhältnis der Ausgangsstoffe festlegt, in Abhängigkeit von den Parametern der Ausgangsstoffe, welche durch die Röntgenfluoreszenzanalyse bestimmt wurden, berechnet wird.

14. Verfahren nach einem der Ansprüche 12 oder 13 **dadurch gekennzeichnet, dass** die phosphorhaltige Asche Klärschlammasche, Gärrestasche, Tiermehlasche und/oder Güllefeststoffasche ist.

15. Verfahren nach einem der Ansprüche 12-14 **dadurch gekennzeichnet, dass** mindestens einer der durch die Röntgenfluoreszenzanalyse bestimmten Parameter für mindestens einen Ausgangsstoff gespeichert wird und der Parameter dem Phosphat- und Mehrnährstoffdüngemittel zugeordnet wird, welches unter mindestens teilweiser Zugabe von diesem Ausgangsstoff hergestellt wurde.
